# EUROPEAN PATENT APPLICATION

(11) **EP 1 679 391 A1**
(43) Date of publication of application: **12.07.2006**
(21) Application number: 04788271.7
(22) Date of filing: 29.09.2004
(51) Int. Cl.: C23C 26/00, C09J 11/06, C09J 5/02, C09J 7/00, B32B 15/08

(54) **TITANIUM OR TITANIUM ALLOY, RESIN COMPOSITION FOR ADHESION, PREPREG AND COMPOSITE MATERIAL**

(30) Priority: 29.09.2003 JP 2003337300
(71) Applicant: TORAY INDUSTRIES, INC., Tokyo 103-8666 (JP)
(72) Inventor: SHINODA, Tomoyuki, Iyo-gun,Ehime 7913120 (JP); YOSHIOKA, Kenichi, 7910121 (JP)
(74) Representative: Coleiro, Raymond
(86) International application number: PCT/JP2004/014204
(87) International publication number: WO 2005/031037

(57) **Abstract**

The present invention relates to a composite material using titaniumor a titanium alloy, and concerns such a composite material obtained through processes in which after an imidazole compound has been applied to the surface of titanium or a titanium alloy, an adhere is adhered thereto. The composite material of the present invention is obtained by adhering the adhere thereto by using an adhesive resin composition containing a thermoplastic resin having a fracture energy release rate G_{1C} of 4500J/m² or more. The present invention makes it possible to provide a composite material using titanium or a titanium alloy, which exerts a superior adhesive strength stably at room temperature as well as even after exposure to a high-temperature, high-humidity condition.

## Description

### TECHNICAL FIELD

This invention relates to titanium or a titanium alloy and a composite material using this, which is desirably applied to, for example, automobile parts, construction materials, aircraft parts and members for sports goods. Moreover, the present invention also relates to a surface treatment method of titanium or a titanium alloy, an adhesive resin composition, a prepreg and a manufacturing method of a composite material thereof.

### BACKGROUND ART

Conventionally, titanium or a titanium alloy, which is superior in mechanical characteristics, such as specific strength (tensile strength/specific gravity) and specific elastic modulus (elastic modulus/specific gravity), as well as in erosion resistance, has drawn public attention not only in special fields such as the space and the ocean, but also, in general industrial applications or medical applications, in recent years, and there have been ever increasing demands year by year.

With respect to titanium or a titanium alloy also, in the same manner as other metals, when a plastic material, such as various thermosetting resins or thermoplastic resins, is adhered or applied thereto, its mechanical characteristics are improved and highly functional properties, such as weather resistance and chemical resistance, can be imparted thereto.

These plastic materials include not only resins to be used as one portion of structural materials, but also resins, such as paints, to be used for the purposes of surface protection and of improving the appearance. In any of these applications, the resulting material can be referred to as a composite material made of titanium or a titanium alloy and a plastic material.

Among the plastic materials, in particular, fiber reinforced plastics, made from reinforcing fibers and a matrix resin, have advantages in that the specific strength and specific elastic modulus are high, superior mechanical characteristics, such as an impact resistant characteristic; are obtained and highly functional properties, such as whether resistance and chemical resistance, are also obtained. Moreover, in the case when continuous fibers are used as reinforcing fibers, by appropriately designing the content of fibers and the lamination structure, superior physical properties suitable for the corresponding application can be obtained, and in the case when discontinuous fibers are used as reinforcing fibers, by appropriately designing the fiber length, fiber content, etc., the same effects can be obtained.

Such a composite material made from fiber reinforcing plastic and titanium or a titanium alloy is expected to exert high mechanical properties or highly functional properties through hybrid effects, which cannot be obtained by using only titanium or a titanium alloy independently or by using only the fiber reinforcing plastic.

In general, in order to allow the above-mentioned composite material constituted by different kinds of materials in combination to exert high mechanical properties or highly functional properties, it is required to provide a superior adhesionbetween the different kinds of materials. Inparticular, in order to provide high mechanical properties, it is the premise that the adhesion of respective materials is properly maintained upon application of a load to the composite material so that the stress is sufficiently transmitted to the respective materials through adhesion layers.

Moreover, in order to protect the surface and improve the external appearance, it is necessary to provide a superior adhesive property so as to prevent the resin such as paint from peeling off the surface of titanium or a titanium alloy.

However, in spite of its potential capable of exerting high mechanical properties and highly functional properties, the composite material made from titanium or a titanium alloy and a plastic material has not been widely used. One of the reasons for this is that its adhesive strength is insufficient. It has been found that when titanium or a titanium alloy is left in the atmosphere, a heterogeneous oxide film is formed on the surface of the titanium or titanium alloy to inhibit the improvement of adhesive strength.

For this reason, a surface treatment method for improving the adhesive property of titanium or a titanium alloy has been proposed (for example, see Patent Document 1). In this method, a titanium alloy is immersed in a normal-temperature bath of a mixed solution of hydrofluoric acid and nitric acid for a predetermined period of time so that the oxide film formed on the surface is removed, and by forming an oxide film on anode is formed on the metal film by using an aqueous solution of sodium hydroxide; thus, the adhesive property of the titanium alloy is improved when it is adhered to another material.

Moreover, another surface treatment method has been proposed (for example, see Patent Document 2) in which: a titanium alloy is anodic oxidized by using a voltage that is not less than a spark discharge generation voltage in an aqueous solution of phosphoric acid and sulfuric acid so that an oxide film on anode is formed on the surface, and this is then heated in a vacuum atmosphere to reduce the oxide film to form a metal state.

However, these methods have the following problems: In Patent Documents 1 and 2, since an acidic aqueous solution such as fluoric acid and phosphoric acid is used, its handling is very difficult, and in particular, in Patent Document 2, it is necessary to subject the oxide film on anode to a reducing process at 900°C for about one hour in a high vacuum of 10⁻³ torr or less, and this process causes high costs. In particular, in the case of a large-size member, large-size treatment bath, vacuum furnace and the like are required to make the corresponding facilities larger, resulting in high costs.

Moreover, although not particularly described in Patent Documents 1 and 2, when the titanium alloy thus treated is left in the air, the oxide film on anode , which is formed on the titanium alloy surface and devotes to improvements of the adhesive property, tends to deteriorate, with the result that problems arise in which: even when an adhesive treatment is applied thereto, a superior adhesive strength is not obtained, and it is necessary to quickly conduct the adhesive treatment after the anodic oxidizing process.

Moreover, in these conventional adhesion treatment techniques, when a composite, that is, an adhesion body, is exposed to a high-temperature, high-humidity atmosphere during an environment endurance test, its adhesive strength deteriorates extremely to cause problems such as separation of the adhered portion even upon simply cutting the adhesion body.

Moreover, a laminate, which is obtained by appropriately designing a titanium alloy and fiber-reinforced plastic, has been proposed as a material that can improve the specific strength, damage resistant property and fatigue preventive property in comparison with a simple body of a titanium alloy or fiber-reinforced plastic (for example, see Patent Document 3).

In accordance with this method, by carrying out a lamination process in combination so that the strength/elastic modulus ratio of a β-titanium alloy and the strength/elastic modulus ratio of fiber-reinforced plastic are made virtually coincident with each other, both of the β-titanium alloy and fiber-reinforced plastic are allowed to share a stress up to fracture even upon application of a load onto the laminated member of the β-titanium alloy and fiber-reinforced plastic, making it possible to improve the specific strength, damage resistant property and fatigue preventive property.

However, no technical contents to improve the adhesive property of a titanium alloy that is a hardly adhering metal have been described in Patent Document 3. Unless a good adhesive property between the titanium alloy layer and the fiber-reinforced plastic layer is prepared, the titanium alloy layer and the fiber-reinforced plastic layer might be fractured at the adhesion surface between the titanium alloy layer and the fiber-reinforced plastic layer, prior to sufficiently sharing the stress.
Patent Document 1: Japanese Patent Application Laid-Open No. 2002-129387 (pp. 1-2)
Patent Document 2: Japanese Patent Application Laid-Open No. 7-252687 (pp. 1-2)
Patent Document 3: Japanese Patent Application National Publication (Laid-Open) No. 2002-509491 (pp. 1-8)

### PROBLEMS TO BE SOLVED BY THE INVENTION

The present invention relates to a composite material using titanium or a titanium alloy, and its objective is to provide a composite material having simple and good workability, in which titanium or a titanium alloy and an adhere are allowed to exert a stable, superior adhesive property at room temperature as well as even after exposure to a high temperature under high-humidity. For this purpose, the present invention provides titanium or a titanium alloy that exerts a superior adhesive property in a stable manner. Moreover, the present invention provides an adhesive resin composition, an adhesive resin film and a prepreg, which exert a stable, superior adhesive property to titaniumor a titanium alloy. The present invention also provides a composite material in which these titanium or titanium alloy, adhesive resin composition, adhesive resin film and prepreg are used. Moreover, the present invention also provides a surface treatment method of metal and a manufacturing method of such a composite material.

### MEANS TO SOLVE THE PROBLEMS

In order to solve the above-mentioned problems, the present invention provides the following structure.

In other words, the present invention relates to titaniumor a titanium alloy that is surface-treated by an imidazole compound.

Moreover, an adhesive resin composition for titanium or a titanium alloy of the present invention is characterized by containing a thermosetting resin and/or a thermoplastic resin and an imidazole compound.

Furthermore, an adhesive resin composition for titanium or a titanium alloy of the present invention is characterized by containing a thermosetting resin and a thermoplastic resin.

An adhesive resin film for titanium or a titanium alloy of the present invention contains the above-mentioned adhesive resin composition.

Moreover, a prepreg of the present invention contains the above-mentioned adhesive resin composition or adhesive resin film and reinforcing fibers.

A composite material of the present invention has a structure in which titanium or a titanium alloy, surface-treated by an imidazole compound, is adhered to an adhere.

Moreover, a composite material of the present invention is formed by allowing titanium or a titanium alloy and an adhere to adhere to each other through an adhesive resin layer formed by curing the adhesive resin composition or the adhesive resin film.

Furthermore, the composite material of the present invention is formed by allowing titanium or a titanium alloy and the prepreg to adhere to each other.

A surface treatment method for titanium or a titanium alloy of the present invention has a process in which the surface of titanium or a titanium alloy is surface-treated by using an imidazole compound or its solution.

Moreover, a manufacturing method of a composite material of the present invention includes a step of applying an adhesive resin composition containing an imidazole compound or a film containing the adhesive resin composition to the surface of titanium or a titanium alloy.

Furthermore, a manufacturing method of a composite material of the present invention includes a step of laminating the prepreg on the surface of titanium or a titanium alloy.

The manufacturing method of a composite material of the present invention includes the steps of applying an adhesive resin composition containing a thermosetting resin and a thermoplastic resin to the surface of titanium or a titanium alloy and heating the resin composition to a temperature higher than the melting point of the thermoplastic resin.

In the present invention, the imidazole compound refers to an organic compound having an imidazole ring. For example, the typical imidazole compound includes a compound indicated by the following general formula (I).

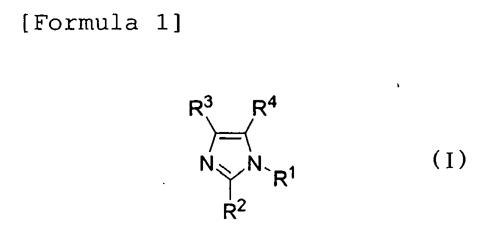

In this formula, R¹ to R⁴ independently represent substituents selected from the group consisting of a hydrogen atom, or an alkyl group, an aminoalkyl group, a hydroxyalkyl group, a cyanoalkyl group, an aryl group and an aralkyl group. Moreover, with respect to R¹ to R⁴, preferably, substituents, selected from the group consisting of a hydrogen atom, or an alkyl group having 1-20 carbon atoms, an aminoalkyl group having 1-20 carbon atoms, an hydroxyalkyl group having 1-20 carbon atoms, a cyanoalkyl group having 2-20 carbon atoms, an aryl group having 6-20 carbon atoms and an aralkyl group having 7-20 carbon atoms, are used.

Moreover, among the compounds represented by general formula (I), any compounds in which R¹ is a hydrogen atom, and additives of those with an epoxy compound, an isocyanate compound, a silane compound or the like are also used as preferable imidazole compounds of the present invention.

### EFFECTS OF THE INVENTION

In accordance with the present invention, it is possible to provide a composite material using titanium or a titanium alloy, which exerts a superior adhesive strength stably at room temperature as well as even after exposure to a high-temperature, high-humidity condition, and in particular, since the peel torque, measured by a CDP test (Climbing Drum Peel test·in compliance with ASTM D 1781-98), can be greatly improved, the composite material is desirably applied to structural members requiring a sufficient adhesive strength, such as automobile parts, construction materials, aircraft parts and members for sports goods.

### BRIEF DESCRIPTIONS OF THE DRAWINGS

[FIG. 1] Fig. 1 is a cross-sectional view that shows one example of an adhesive resin layer after having been cured of a composite material of the present invention.
[FIG. 2] Fig. 2 is a cross-sectional view that shows another example of the adhesive resin layer after having been cured of a composite material of the present invention.
[FIG. 3] Fig. 3 is a cross-sectional view that shows one example of an adhesive resin layer after having been cured.
[FIG. 4] Fig. 4 is a cross-sectional view that shows another example of the adhesive resin layer after having been cured.
[FIG. 5] Fig. 5 is a longitudinal cross-sectional view that shows one example of a lap shear test piece using a composite material of the present invention.
[FIG. 6] Fig. 6 is a longitudinal cross-sectional view that shows one example of a CDP test piece using a composite material of the present invention.

### REFERENCE NUMERALS

1 ...... Titanium or titanium alloy
2 ...... Adhesive surface
3 ...... Adhesive resin layer
4 ...... Thermoplastic resin in a cohesive phase and in a discontinuously distributed state
5 ...... Thermosetting resin
6 ...... Adhere
7 ...... Thermoplastic resin in a non-cohesive phase
8 ...... Carbon fiber reinforced plastic

### BEST MODE FOR CARRYING OUT THE INVENTION

The following description will discuss the best mode for carrying out the invention.
1. Concerning titanium and titanium alloy used in the present invention
Of titanium and a titanium alloy to be used in the present invention, the titanium refers to so-called pure titanium. Moreover, the titanium alloy includes so-called α alloy, β alloy, α + β alloy and the like.

Since the mechanical property of pure titanium varies greatly depending on contents of invasion-type impurities such as O, N, H and C, commercial pure titanium is standardized depending on the contents of various elements in accordance with various standards. Under the JIS standard, three types thereof are standardized depending on, in particular, the content of O as described in the following Table 1. Of course, pure titanium other than these may be used in the present invention.

[Table 1]

**Table 1**

| Types | Chemical components (mass%) | | | | | Tensile strength (MPa) | Proof stress (MPa) | Elongation (%) |
|---|---|---|---|---|---|---|---|---|
| | H | O | N | Fe | Ti | | | |
| JIS 1^{st} type | < 0.013 | < 0.15 | < 0.05 | < 0.20 | Residual component | 275 - 410 | > 165 | > 27 |
| JIS 2^{nd} type | < 0.013 | < 0.20 | < 0.05 | < 0.25 | Residual component | 345 - 510 | > 215 | > 23 |
| JIS 3^{rd} type | < 0.013 | < 0.30 | < 0.07 | < 0.30 | Residual component | 480 - 620 | > 345 | > 18 |

The crystal structure of pure titanium is a closest hexagonal crystal (α phase) at room temperature, and forms a body-centered cubic crystal (β phase) at 885°C or more. By adding alloy elements such as Al, Mo, V, Sn, Zr, Fe and Cr to pure titanium to form a titanium alloy, both of the α phase and β phase are allowed to coexist at room temperature. Here, the α alloy and β alloy respectively refer to an alloy made of α phase and an alloy made of β phase. Moreover, the α + β alloy refers to an alloy in which both of the α phase and β phase coexist.

The α alloy is typically represented by Ti-Al alloy, and is solid-solution strengthened by adding Al, Sn, Zr, etc. thereto. Examples of the α alloy include: Ti-5Al-2.5Sn, Ti-8Al-V-Mo, Ti-6Al-2Sn-4Zr-2Mo-0.1Si, and Ti-6Al-5Zr-0.5Mo-0.25Si.

The β alloy is obtained through processes in which: a large amount of a β-stabilizing element, such as Mo, V and Cr, is added and by quickly cooling the β phase, the β phase is completely allowed to remain even at room temperature. Moreover, in an attempt to improve the age hardening property, an α-phase stabilizing element, such as Al, Sn and Zr, may be added thereto. Examples of the β alloy include: Ti-13V-11Cr-3Al, Ti-11.5Mo-4.5Sn-6Zr, Ti-4Mo-8V-6Cr-3Al-4Zr, Ti-15Mo-5Zr, Ti-15Mo-5Zr-3Al, Ti-8Mo-8V-2Fe-3Al and Ti-15V-3Cr-3Al-3Sn.

The α + β alloy is obtained through processes in which: the material elements are subjected to a solution treatment at a high temperature range in an α + β phase area or a β phase area, and after having been quickly cooled, are then subjected to an age heating treatment at a temperature range from 400 to 600°C.

Examples of the α + β alloy include: Ti-6Al-4V, Ti-6Al-2Sn-4Zr-6Mo, Ti-6Al-6V-2Sn and Ti-11Sn-5Zr-2.5Al-Mo-1.25Si.

Among these pure titanium and titanium alloys, β alloys such as Ti-15V-3Cr-3Al-3Sn and α + β alloys such as Ti-6Al-4V, which easily provide a high strength during the use at a normal temperature, are preferably used. With respect to the shape of titanium or a titanium alloy, not particularly limited, anyshapes, such as a plate shape, a rod shape and a thread shape, may be used.
2. Concerning imidazole compound to be used in the present invention
The imidazole compound used in the present invention refers to an organic compound having an imidazole ring. With respect to the typical imidazole compound, compounds indicated by the above-mentioned general formula (I) are adopted.

Specific examples of the compound indicated by the above-mentioned general formula (I) are shown as I-1 to I-12 below:

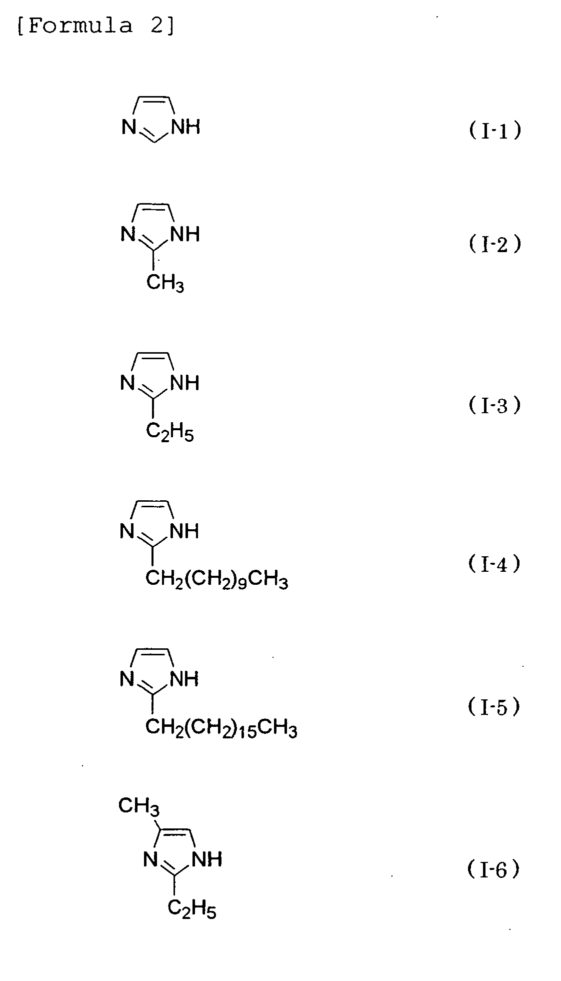

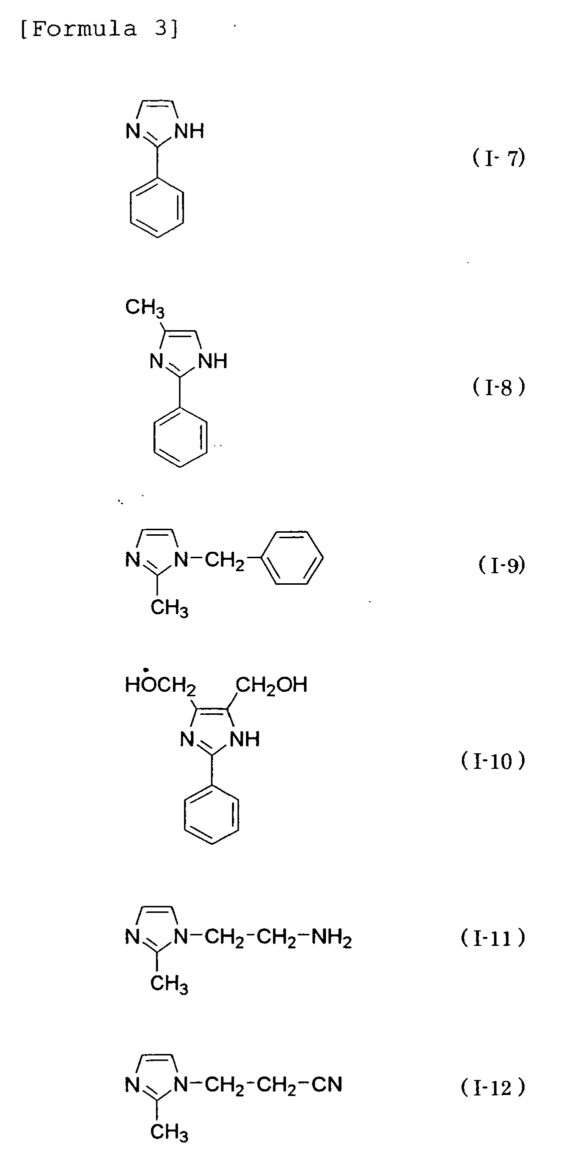

Examples of the imidazole compound further include a salt between a compound represented by general formula (I) and an acid. With respect to the acid, examples thereof include: hydrochloric acid, tetrafluoroboric acid, perchloric acid, hexafluorophosphoric acid, acetic acid, trimellitic acid and cyanuric acid.

Among those compounds indicated by general formula (I), examples of the imidazole compound include additives between those compounds in which R¹ is a hydrogen atom and epoxy compounds. Examples of the epoxy compound include: bisphenol A diglycidyl ether and bisphenol F diglycidyl ether.

Examples of the imidazole compound further include additives between those compounds represented by general formula (I) in which R¹ is a hydrogen atom and isocyanate compounds. Examples of the isocyanate compound include: tolylene diisocyanate and hexamethylene diisocyanate.

Examples of the imidazole compound further include additives between those compounds represented by general formula (I) in which R¹ is a hydrogen atom and silane compounds. Specific examples of these imidazole silane compounds include: imidazole silane compounds indicated by general formulas (II), (III) and (IV), and a salt between such an imidazole silane compound and an acid. With respect to the acid, examples thereof include: hydrochloric acid, tetrafluoroboric acid, perchloric acid, hexafluorophosphoric acid, acetic acid, trimellitic acid and cyanuric acid.

The manufacturingmethod and specific examples of these imidazole silane compounds are described in Japanese Examined Patent Publication No. 07-068256.

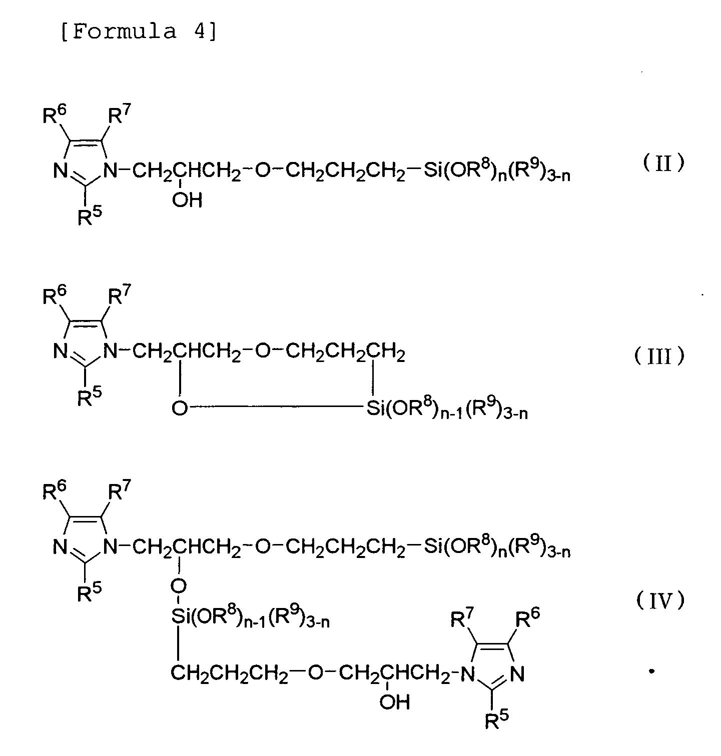

Here, these formula, R⁵ to R⁷ independently represent substituents selected from the group consisting of a hydrogen atom, or an alkyl group, an aminoalkyl group, a hydroxyalkyl group, a cyanoalkyl group, an aryl group and an aralkyl group, and R⁸ to R⁹ represent alkyl groups. Here, n is an integer of 1-3. Moreover, with respect to R⁵ to R⁷, preferably, substituents selected from the group consisting of a hydrogen atom, or an alkyl group having 1-20 carbon atoms, an aminoalkyl group having 1-20 carbon atoms, an hydroxyalkyl group having 1-20 carbon atoms, a cyanoalkyl group having 2-20 carbon atoms, an aryl group having 6-20 carbon atoms and an aralkyl group having 7-20 carbon atoms are used. With respect to R⁸ to R⁹, an alkyl group having 1-4 carbon atoms is preferably used.

Among these, with respect to the imidazole compound, in particular, an imidazole silane compound is preferably used. Since the imidazole silane compound allows the compound itself to form a network through a silanol bond, it becomes possible to improve the adhesive property.

With respect to the imidazole silane compound to be used in the present invention, those of a trialkoxysilyl type containing a secondary hydroxide group are preferably used. Since the imidazole silane compound of this type forms a siloxane network through a condensation reaction of the alkoxysilyl group to improve the adhesive property, it is preferably used. For the same reason as described above, the imidazole silane compounds of a dialkoxysilyl type containing a secondary hydroxide group and of a trialkoxysilyl type containing no secondary hydroxide group are also preferably used. Moreover, the imidazole silane compound may be allowed to react with an organic acid to form salt of the imidazole silane compound, and this may also be preferably used.

The imidazole silane compound is preferably adopted as a silane coupling agent containing an imidazole ring. Here, the coupling agent having an imidazole ring is prepared as an imidazole silane compound itself, or as a composition containing an imidazole silane compound. Compounds other than the imidazole silane compound may be added to the coupling agent containing an imidazole ring, if necessary. The silane coupling agent containing an imidazole ring to be used in the present invention preferably contains 10 to 30 % by weight of an imidazole silane compound and 70 to 90 % by weight of an aromatic compound. The adhesive resin composition is normally kneaded under a heated state by using a kneader or the like so as to uniformly disperse the resin, the silane coupling agent and thermoplastic resin particles that form constituent components. Moreover, when the adhesive resin composition is processed into a film, the filming process is normally carried out under a heated state by using a coater or the like. For this reason, when an epoxy resin is contained in the adhesive resin composition, the imidazole ring tends to react with the epoxy resin as a curing agent or a curing accelerator due to the temperature appliedupon kneading or filming, sometimes resulting in problems of an increased viscosity of the adhesive resin composition and the like. In contrast, in the case of the silane coupling agent containing an imidazole ring that contains an aromatic compound, the reactivity becomes higher after the aromatic compound has been fused; therefore, by setting the temperature of the kneading or filming process to a temperature lower than the melting point of the aromatic compound, it becomes possible to improve the thermal stability of the adhesive resin composition and the adhesive resin film, and consequently to provide a preferable process. With respect to the aromatic compound, although any of those compounds may be used, acidic aromatic compounds, such as phenol, cresol, naphthol, benzoic acid, naphthoic acid and salicylic acid, are preferably used from the viewpoint that these are easily mixed with the imidazole silane compound uniformly.

Although there is no description about titanium or titanium alloys, Japanese Patent Application Laid-Open No. 9-12683 has proposed a method in which, in the field concerning a copper plated laminated plate serving as a printed circuit board, an epoxy resin composition containing imidazole silane or its mixture is used so as to improve the adhesive property of an alloy mainly made from copper, zinc or these metals to an epoxy resin composition. Moreover, Japanese Patent Application Laid-Open No. 5-186479 has proposed a technique by which, with respect to a copper plated laminated plate formed by laminating copper foil and prepreg to be cured thereon by using a surface treatment agent in which an imidazole silane compound is used as its effective component, the adhesive property between the copper foil and the fiber reinforced plastic made of the prepreg is improved. By using this method, it is possible to improve the peel strength by 1.1 times in the blank contrast.

However, alloys derived from copper, iron, aluminum and the like are originally adhered easily so that these can be desirably adhered even by using a generally used coupling agent, such as an epoxy silane coupling agent and an aminosilane coupling agent. For this reason, even by the use of an imidazole silane compound, the peel strength is improved only in a small level, that is, 1.1 times, in comparison with the use of a conventional coupling agent.

In contrast, titanium or a titanium alloy is a metal that is hardly adhered, and its adhesive property cannot be improved even by the use of a commonly-used epoxy silane coupling agent or aminosilane coupling agent. For this reason, conventionally, in order to improve the adhesive property of titanium or a titanium alloy, it is necessary to modify the metal surface of the titanium or titanium alloy itself and various surface treatment methods using an acidic solution have been proposed.

After extensive examinations, the inventors have found out that, as described above, when titanium or a titanium alloy is surface-treated by using an imidazole compound, the adhesive property is remarkably improved to a level two to ten times higher than the use of a generally-used coupling agent such as an epoxy coupling agent and an aminosilane coupling agent. This finding makes it possible to improve the adhesive property of titanium or a titanium alloy by the use of an easy process for the first time. Moreover, it has been found for the first time that the imidazole compound exerts such a remarkable effect on titanium or a titanium alloy.
3. Concerning surface-treated titanium or titanium alloy
The titanium or titanium alloy of the present invention, thus surface-treated by an imidazole compound, is allowed to exert a superior adhesive property stably on an adhere. Here, the expression "surface-treated by an imidazole compound" refers to the fact that the imidazole compound is adhered to the adhesion-related surface (hereinafter, referred to as "adhesion surface") of titanium or a titanium alloy. The following description will discuss a method of the surface treatment.

First, the adhesion surface of titanium or a titanium alloy is subjected to a sanding or blasting process by using a sand paper, a sand-blasting process or a wet-blasting process. The wet-blasting process refers to a process in which the blasting is carried out by using a solution in which a polishing agent is mixed with water, and in this method, since the blasting process can be carried out with oxygen being blocked, it becomes possible to provide a preferable method. After having been subjected to a sanding process or a blasting process, the adhesion surface is washed and defatted with an organic solvent such as acetone or ethanol. Next, the adhesion surface of titanium or a titanium alloy is processed by using an imidazole compound or an imidazole compound solution in which the imidazole compound is dissolved in water or ethanol. The surface treatment is preferably carried out so that the adhesive property can be improved and in the case when the adhere contains an epoxy resin composition, the imidazole compound serves as a curing agent or a curing accelerator to accelerate the curing process of the epoxy resin on the adhesion surface and also to desirably improve the curing degree. In particular, in the case when the titanium or the titanium alloy is surface-treated by using the imidazole compound solution, in particular, in a state in which after the wet blasting process, the blasted surface has not been dried, since the surface treatment is carried out with oxygen being blocked, it is possible to provide a preferable process.

The combination rate of the imidazole compound is preferably set in a range from 0.1 to 10% by weight, more preferably, from 0.2 to 2% by weight, in the solution.

The combination rate of less than 0.1% by weight makes the amount of the imidazole compound too small to fail to provide a sufficient adhesive effect. The combination rate exceeding 10% by weight fails to further improve the adhesive strength, and also causes conspicuous deposition of the imidazole compound on the treatment surface after the solvent has been evaporated from the treatment surface of titanium or a titanium alloy, resulting in degradation in the handling property. In the case when the amount of the imidazole compound is too much, if the resin of the adhere contains an epoxy resin composition, the imidazole compound functions as a curing agent or a curing catalyst to accelerate the curing reaction beyond the necessary level, failing to provide an appropriate process.

With respect to the method for carrying out a surface treatment on the surface of titanium or a titanium alloy by using the above-mentioned solution, any one of conventional methods, such as a coating method, a dipping method and a spraying up method, may be used.

Moreover, with respect to the solvent, not a single solvent such as water and methanol, but a mixed solvent in which a soluble thermoplastic polymer is dissolved in a solvent such as ethanol may also be used.

In particular, since polyvinyl butyral is superior in solubility and has a film-forming property, a solution in which an imidazole compound and polyvinyl butyral are blended in a solvent such as ethanol is used so that the surface of the titanium or titanium alloy is treated; thus, after the ethanol solvent has been evaporated, polyvinyl butyral containing the imidazole compound is allowed to form a film so that a uniform polyvinyl butyral layer containing the imidazole compound is formed on the surface of the titanium or titanium alloy, thereby making it possible to provide a preferable method.

The titanium or titanium alloy that has been subjected to a surface treatment in any one of the above-mentioned methods can be processed by evaporating the solvent by using either a natural drying method or a heat drying method using a heating furnace or the like. In the case when an imidazole silane compound and a thermoplastic polymer such as polyvinyl butyral are used, in particular, through an appropriate heating process using a heating furnace, it is possible to desirably form a finer network of the coupling agent and the polymer.
4. Concerning the adhesive resin composition
The following description will discuss the adhesive resin composition for titanium or a titanium alloy of the present invention.

The adhesive resin composition of the present invention is characterized by containing a thermosetting resin and an imidazole compound.

With respect to the imidazole compound, the above-mentioned various imidazole compounds are preferably used. In particular, a silane coupling agent containing an imidazole ring is more preferably used.

The combination rate of the imidazole compound is preferably set in a range from 0.1 to 10% by weight in the resin composition, more preferably, from 0.2 to 2% by weight.

The combination rate of less than 0.1% by weight makes the amount of the imidazole compound too small, failing to provide sufficient effects. The combination rate exceeding 10% by weight fails to further improve the adhesive strength, and also causes problems in that, when the thermosetting resin is an epoxy resin, the imidazole compound functions as a curing agent or a curing catalyst to accelerate the curing reaction beyond the necessary level, failing to provide an appropriate process.

In addition to a thermosetting resin, the adhesive resin composition of the present invention preferably contains a thermoplastic resin. By blending the thermoplastic resin in the adhesive resin composition, the toughness of the adhesive resin composition is preferably improved. The toughness of the adhesive resin composition is improved so that the adhesive property thereof can be further improved. Moreover, in the case when the thermoplastic resin is non-soluble to the thermosetting resin or in the case when it is not completely soluble even if one portion thereof is soluble thereto, this state is preferable since an interlayer gap of the adhesive resin composition can be maintained even after the adhesion process. By maintaining the interlayer gap of the adhesive resin composition, the advantage is obtained in which, when an impact load is imposed on a composite material, the interlayer portion of the adhesive resin composition is allowed to effectively function as a stress alleviating layer.

Another aspect of the adhesive resin composition of the present invention is to prepare an adhesive resin composition containing a thermosetting resin and a thermoplastic resin. The inclusion of the thermoplastic resin makes it possible to improve the adhesive property to-titanium or a titanium alloy as described earlier. The adhesive resin composition in this aspect makes it possible to improve the adhesive property even when no imidazole compound is used. Of course, by further using an imidazole compound in combination, the adhesive property is further improved preferably. Moreover, it is preferable to use the adhesive resin composition in this aspect in combination with titanium or a titanium alloy that has been surface-treated by the above-mentioned imidazole compound.

With respect to the thermoplastic resin, any of thermoplastic resins such as polyimide (PI), polyetherimide (PEI), polyamide (PA), polyamideimide (PAI), polyethersulfone (PES) and polyetherether ketone (PEEK). Among these, polyamide that has a superior adhesive property is preferably used.

In the case when an imidazole compound is contained in the adhesive resin composition, a thermoplastic resin that is superior in heat resistance and corrosion resistance is preferably used. Among these, since polyimide, polyamideimide and polyetherimide are particularly superior in heat resistance, these thermoplastic resins having a superior heat resistance are preferably used in order to improve the heat resistance of the adhesive resin. Moreover, for example, in the case when polyamide is epoxy-modified, since this process improves the heat resistance and the corrosion resistance to consequently improve the heat resistance and the corrosion resistance of the adhesive resin, although the fracture energy release rate G_{1C} is lowered, thereby providing a preferable method.

In contrast, in the case when no imidazole compound is contained in the adhesive resin composition, the fracture energy release rate G_{1C} of a thermoplastic resin to be used as the adhesive resin composition is preferably set to 4500J/m² or more. The fracture energy release rate G_{1C} of less than 4500J/m² causes a reduction in energy required for fracture even when the strength and elastic modulus of the thermoplasticresin are high, resulting in an undesirable state in which cracks easily progress in the adhesive resin layer. The fracture energy release rate G_{1C} forms a parameter indicating the toughness of the resin, and the greater the value, the better. More preferably, it is set to 8000J/m² or more, most preferably, to 15000J/m² or more. By setting the fracture energy release rate G_{1C} to a high level, the toughness of the adhesive resin composition becomes higher, thereby making it possible to provide a higher adhesive property without the necessity of containing any imidazole compound. Of course, by further using an imidazole compound in combination, the adhesive property may be further improved more preferably.

The fracture energy release rate G_{1C} of the thermoplastic resin to be used in the present invention is measured by using a double torsion method (hereinafter, referred to as DT method). Here, the DT method is described in detail in pp. 77-84, Vol. 20 of Journal of Materials Science (1985), etc.

With respect to the thermoplastic resin having a fracture energy release rate G_{1C} of 4500J/m² or more, crystalline nylon 12, non-crystalline polyamide and the like are proposed. Although its heat resistance is slightly low, the crystalline nylon 12 has a very big fracture energy release rate G_{1C} so that a very great energy is required until the adhesive resin has been fractured; thus, it becomes possible to preferably prevent crack propagations in the adhesive resin layer.

As described above, the thermoplastic resin is preferably selected depending on the respectivecases. Moreover, a plurality of thermoplastic resins may be used. Depending on required characteristics, a thermoplastic resin that is superior in the heat resistance and corrosion resistance and a thermoplastic resin that has a fracture energy release rate G_{1C} of 4500J/m² or more may be mixed with each other and used.

Here, a thermoplastic elastomer, which has satisfied the above-mentioned requirements, may be preferably used as the thermoplastic resin. With respect to the thermoplastic elastomer, those of ionomer type (IO), polyolefin type (TPO), urethane type (TPU), polyamide type (TPAE), polyvinylchloride type (TPVC) or the like are preferably used.

The combination rate of the thermoplastic resin in the resin composition is preferably set in a range from 5 to 50% by weight, more preferably, from 10 to 40% by weight. The combination rate of less than 5% by weight would cause problems such as a failure to improve the toughness of the adhesive resin by the use of the thermoplastic resin and an insufficient preparation of an interlayer gap in the adhesive resin. In contrast, the combination rate exceeding 50% by weight would cause problems such as difficulty in uniformly carrying out a dispersing process through kneading, a higher resin viscosity to cause degradation in the handling property and degradation in heat resistance of the adhesive resin in the case of using a thermoplastic resin that is poor in heat resistance.

The mode of the thermoplastic resin is not particularly limited, and non-woven fabrics or films may be used on demand. Among these, spherical particles are preferably used because the use of these improves the filling rate of the thermoplastic resin. In particular; fine particles having a diameter of 1 to 50µm aremorepreferablyused. Mostpreferably, those particles having a diameter of 3 to 20µm are used. In particular, in the case when fiber reinforced plastic is used as the adhere, by setting the diameter of the fine particles to 3 to 20 µm, it becomes possible to preferably improve the filling rate without disturbing the arrangement of the fibers.

After the curing process, the thermoplastic resin inside the adhesive resin composition is preferably made to have a discontinuous phase. Here, the discontinuous phase refers to a state in which the thermoplastic resin is not formed into a continuous state like non-woven fabrics and films, but distributed into a discontinuous state. This state is exemplified by a thermoplastic resin consisting of spherical particles; however, the other shapes, such as elliptical particles and irregular particles, may be used as long as those are distributed into a discontinuous phase. The discontinuous phase is preferably used because the thermoplastic resin can be preliminarily stirred and mixed inside the adhesive resin composition.

After the curing process, the thermoplastic resin inside the adhesive resin composition is preferably made to have a cohesive phase. Here, the cohesive phase refers to a state in which at least one portion of a plurality of thermoplastic resins combined in a discontinuous phase is cohered inside the adhesive resin composition after the curing process. By allowing the thermoplastic resin to have the cohesive phase, the adhesive property can be improved due to an anchor effect exerted when the adhesive resin composition is fractured, or the advantage of preventing crack propagations is obtained; therefore, this structure is preferably used.

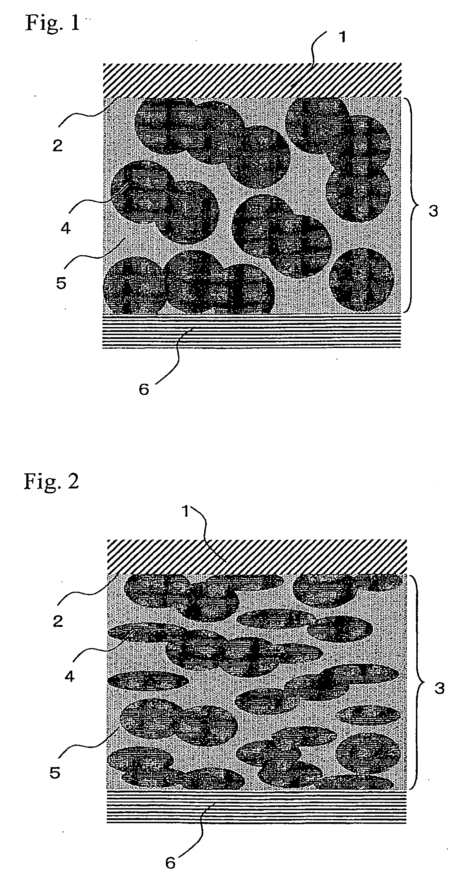

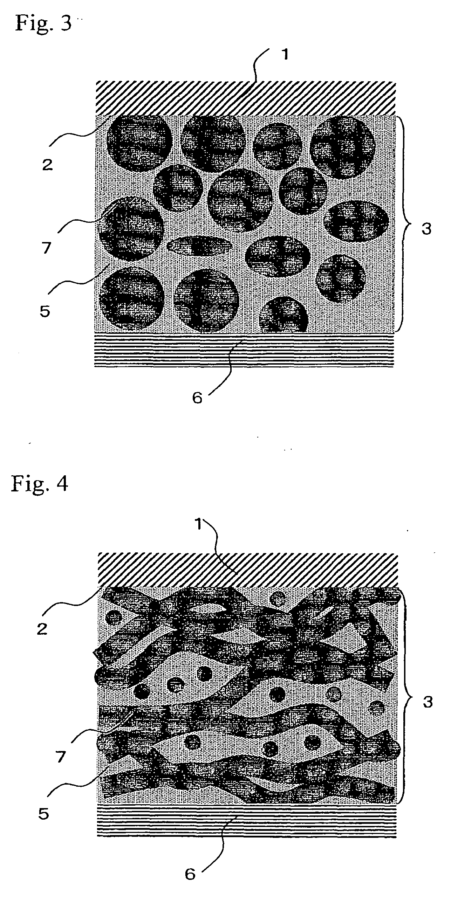

Figs. 1 and 2 show typical examples in which a thermoplastic resin is in a discontinuous phase and is also in a cohesive phase inside an adhesive resin composition. Figs. 3 and 4 show typical examples in which a thermoplastic resin is neither in a discontinuous phase nor in a cohesive form. Fig. 1 is an example in which a thermoplastic resin consisting of virtually spherical particles is distributed in a discontinuous phase as well as in a cohesive phase inside the adhesive resin layer that has been cured. Moreover, Fig. 2 is an example in which a thermoplastic resin consisting of virtually elliptical particles is distributed in a discontinuous phase as well as in a cohesive phase. Fig. 3 shows an example in which a thermoplastic resin consisting of virtually spherical particles is distributed in a non-cohesive phase although it is in a distributed phase. Fig. 4 shows an example in which a thermoplastic resin consisting of fibers is distributed in a continuous phase.

In particular, in the case when no imidazole compound is used, a crystalline thermoplastic resin is preferably used as the thermoplastic resin. More preferably, a crystalline thermoplastic resin having a melting point of 200°C or less is used. In the case when no imidazole compound is used, the adhesive property is preferably improved by allowing the thermoplastic resin to form a discontinuous phase as well as a cohesive phase in the adhesive resin composition that has been cured, as described above. Upon molding, by heating the thermoplastic resin to a temperature that is the melting point or more, the thermoplastic resin is fused or becomes a state close to the fused state in the adhesive resin composition, and since adjacent thermoplastic resin particles are fused to each other, the resulting resin is formed into a cohesive phase. In particular, in the case when the adhere is prepared as fiber reinforced plastic, since the upper limit of the molding temperature becomes about 200°C in most cases, the melting point of the thermoplastic resin is preferably set to 200°C or less, in order to allow the thermoplastic resin to have a cohesive phase at the molding temperature. Moreover, by carrying out a molding process at the melting point or more of the thermoplastic resin, the thermoplastic resin is fused or becomes close to the fused state so that the adhesive property to the thermosetting resin is preferably improved. In particular, polyamide is a thermoplastic resin superior in its adhesive property; therefore, from the above-mentioned point of view, crystalline polyamide having a melting point of 200°C or less is preferably used.

In the case when a non-crystalline thermoplastic resin is used as the thermoplastic resin, without using an imidazole compound, a thermoplastic resin that has a low glass transition point and is easily fused is preferably used in the same manner.

With respect to a thermoplastic resin to be used for the adhesive resin composition, an epoxy resin is preferably used. The epoxy resin is superior in the adhesive property and mechanical characteristics. Moreover, within the range of the combination rate of the imidazole compound of the present invention, since the imidazole compound improves the adhesive property, and also accelerates the curing reaction of the epoxy resin, it is possible to form a firm adhesive resin layer.

Moreover, in the case when a plastic-based material is used for the adhere, the same material as or a material similar to the material used for the plastic of the adhere is preferably used. By using the same material or similar materials as plastic materials for both of the adhesive resin composition and the adhere, the adhesive property thereof can be preferably improved.

With respect to the base resin for the adhesive resin composition, the above-mentioned thermoplastic resin may be used in place of the thermosetting resin. By using the thermoplastic resin as the base resin, the toughness of the adhesive resin composition is preferably improved. In particular, in the case when the adhere is formed by a plastic material made from a thermoplastic resin, an adhesive resin composition using the same kind of the thermoplastic resin as the base resin is preferably used from the viewpoints of the adhesive property and moldability.

In the same manner as a normal liquid-state adhesive agent, the adhesive resin compositionmaybe applied to the adhesion surface of titanium or a titanium alloy by using a known method, such as a coating method, a dipping method and a spraying up method.
Moreover, with respect to the method for allowing the thermoplastic resin to have a discontinuous phase in a cohesive phase inside the adhesive resin layer after the curing process, a preferable method is proposed in which, in the case when the thermoplastic resin has a crystalline property, after an adhesive resin composition containing a thermosetting resin and a thermoplastic resin has been applied to the surface of titanium or a titanium alloy, a heating process is carried out to a temperature higher than the melting point of the thermoplastic resin. By preliminarily blending a thermoplastic resin having a discontinuous phase with spherical particles or particles having another shape inside the adhesive resin composition and heating to a temperature higher than the melting point of the thermoplastic resin upon molding, the thermoplastic resin is fused or becomes a state close to the fused state inside the adhesive resin composition, and since adjacent thermoplastic resin particles are fused to each other, the resulting resin is formed into a cohesive phase. Here, upon curing and molding the adhesive resin composition, a molding pressure is preferably applied thereto so that the thermoplastic resin is allowed to easily have the cohesive phase. Moreover, by applying the pressure, the thermoplastic resin that originally has spherical particles is preferably made to have elliptical particles or particles having another shape. By deforming the particles into the elliptical shape or the like, an anchor effect caused by the shape of the thermoplastic resin particles is exerted when a stress is imposed on the adhesive resin layer so that the adhesive property between the thermoplastic resin and the thermosetting resin used in the adhesive resin composition is desirably improved. Here, although the non-crystalline thermoplastic resin has no accurate fusing point, the same effects can be obtained by carrying out the molding process at a temperature higher than the fusing temperature of the thermoplastic resin in the same reasons as described earlier.
5. Concerning an adhesive resin film
The following description will discuss an adhesive resin film in accordance with the present invention. The adhesive resin film of the present invention is a film containing the aforementioned adhesive resin composition. The adhesive resin film of the present invention can be obtained by forming the aforementioned adhesive resin composition into a film shape.

The adhesive resin film is preferably used because it can uniformly apply the adhesive resin composition onto a comparatively simple adhesion surface such as, in particular, a plate member, as a film having an even thickness without irregularities in the thickness. From this point of view, not necessarily limited to the film shape, any adhesive resin compositions having a shape, such as a plate shape, a non-woven fabric form or a network form, may be used.

The thickness of the adhesive resin film is preferably set to 0.01 to 1.0 mm. More preferably, the thickness is set to 0.2 to 0.8 mm. The thickness of less than 0.01 would make the adhesive resin layer too thin, resulting in problems in that it becomes difficult to form a film, and in that, in the case when the resin flows out from the adhesive resin due to a molding pressure or the like, the adhesive resin no longer exists on the adhesion surface to cause degradation in the adhesive strength. In contrast, the thickness exceeding 1.0 mm would cause not only an increase in the weight of themoldedproduct, but also an increase in the amount of flow of the adhesive resin due to a pressure applied upon molding, resulting in problems.
6. Concerning prepreg.
The following description will discuss a prepreg in accordance with the present invention. The prepreg of the present invention contains the above-mentioned adhesive resin composition and reinforcing fiber base material.

When madefrom continuousfibers,thereinforcingfiber base material to be used for the prepreg may have any one of forms, such as a one-directional reinforcing fiber base material, a textile base material and a non-woven fabric base material. In contrast, when the reinforcing fiber base material is made from short fibers, the reinforcing fiber base material may have any one of forms, such as a short-fiber mat base material and a non-woven fabric base material. Among these, the one-direction base material is more preferably used because it is superior in mechanical properties. Here, although the mechanical characteristics of a prepreg using the textile base material or the short-fiber base material are inferior to the mechanical properties of the one direction base material, the prepreg is superior in its shape-retaining property so that this mode is preferably used when the prepreg is formed into a complicated shape.

In the present invention, the reinforced fibers refer to high-strength fibers with a high modulus of elasticity, such as carbon fibers, glass fibers and metal fibers. In particular, carbon fibers are preferably used as the reinforced fibers. Since the carbon fibers are light-weight and superior in mechanical characteristics, and have a high corrosion-resistant property, a composite material, made from titanium or a titanium alloy and carbon fiber reinforced plastics, is desirably allowed to have advantages, such as light-weight, superior mechanical properties and a good corrosion resistance.

One mode of the prepreg of the present invention is prepared as a structure in which a reinforcing fiber base material is impregnated with the adhesive resin composition of the present invention. The adhesive resin composition with which the reinforcing fiber base material is impregnated is preferably designed to have a film form. In a process in which the base material made from reinforcing fibers is impregnated with the adhesive resin composition, by allowing a resin composition used for impregnation to preliminarily have the film form, the impregnating property is desirably improved to provide advantages in that the areal weight of the resin to the fiber reinforced base material can be easily controlled.

Moreover, another mode of the prepreg of the present invention is prepared as a structure in which the adhesive resin composition of the present invention is placed on the surface layer of the prepreg base material that is formed by preliminarily impregnating the reinforcing fiber base material with a matrix resin. In other words, it is not necessarily required for the base material made from reinforcing fibers to be impregnated with the adhesive composition, and the adhesive resin composition of the present invention can exert the same adhesive property when the adhesive resin composition is placed on the surface of the prepreg. More specifically, for example, the adhesive resin composition of the present invention is placed on the surface of a conventional prepreg formed by preliminarily impregnating, a base material made from reinforcing fibers with a matrix resin, with a predetermined thickness, by using a coater or the like. This structure is preferably adopted from the viewpoint that a prepreg that is easily adhered to titanium or a titanium alloy can be prepared by using a conventional prepreg.

Moreover, the adhesive resin composition of the present invention to be placed on the surface of a prepreg is preferably prepared as the above-mentioned adhesive resin film. More specifically, the adhesive resin film of the present invention is laminated to the surface of a conventional prepreg formed by preliminarily impregnating a reinforcing fiber base material with a matrix resin. This structure is also preferably adopted from the viewpoint that a prepreg that is easily adhered to titanium or a titanium alloy can be prepared by using a conventional prepreg. Moreover, by using an adhesive resin film in which the areal weight of the resin has been preliminarily controlled, it is possible to desirably obtain the advantage that the areal weight of the adhesive resin composition to be placed on the surface of a prepreg is easily controlled.
7. Concerning a composite material
By using the above-mentioned method, it becomes possible to form a composite material in which titanium or a titanium alloy and an adhere are allowed to have a superior adhesive property in a stable manner. Among the above-mentionedmethods, preferably, two or more of those may be used in combination.

With respect to the adhere, not particularly limited, plastic-based materials, metal materials and the like may be used. With respect to the plastic-based materials, both of the thermosetting resin and thermoplastic resin may be used. In the case when the thermosetting resin is used, either of methods in which, after such a resin before the curing process has been bonded to titanium or a titanium alloy, the thermosetting resin is cured and in which a thermosetting resin that has been preliminarily cured is bonded to titanium or a titanium alloy, may be used.

When the method in which a thermosetting resin preliminarily cured or a metal material is bonded to titanium or a titanium alloy is used, the two members are preferably bonded to each other through an adhesive resin layer. With respect to the adhesive resin layer, various layers may be used; however, preferably, a thermosetting adhesive resin composition and an adhesive resin film are used, and by curing these to form an adhesive resin layer, it becomes possible to desirably obtain a high adhesive strength. The adhesive resin composition of the present invention is also preferably used. Here, in the case when the method in which, after a thermosetting resin before the curing process has been laminated to titanium or a titanium alloy, the thermosetting resin is cured is used, the two members may be directly adhered to each other, without the adhesive resin layer being sandwiched between them. In the case of using a thermosetting resin before the curing process also, the bonding process may be preferably carried out through the adhesive resin layer in the same manner as described above.

With respect to the plastic material, fiber reinforced plastic is preferably used. More preferably, carbon fiber reinforced plastic is adopted.

When the plastic material is prepared as the fiber reinforced plastic, a discrete adhesive resin layer is preferably interposed between titanium or a titanium alloy and the fiber reinforced plastic. Here, the discrete adhesive resin layer refers to a resin layer that contains no reinforcing fibers. The discrete adhesive resin layer thus interposed not only increases the adhesive effect, but also serves as a stress alleviating layer so that peeling between titanium or a titanium alloy and the fiber reinforced plastic is prevented. Moreover, by blending thermoplastic resin particles, non-woven fabric or the like in the discrete adhesive resin layer, the interlayer gap in the discrete adhesive resin layer is easily maintained, and the toughness of the discrete adhesive resin layer is consequently improved so that the adhesive property is preferably improved. Here, any method may be used to form the discrete adhesive resin layer; however, a resin layer, formed by curing an adhesive resin composition or an adhesive resin film therein, is preferably used as the discrete adhesive resin layer so that the bonding process is preferably carried out together with the formation of the discrete adhesive resin layer.

With respect to the adhere for a metal material, another titanium or titanium alloy may be used. Although the titanium or titanium alloy is superior in mechanical properties, it is poor in workability, and hardly molded into a complicated shape. Therefore, by using the present invention, titanium members or titanium alloys can be mutually adhered to each other so that titanium or a titanium alloy is desirably formed into a complicated shape. Of course, another metal or alloy, such as an aluminum alloy, may be preferably used as the adhere.

The following description will discuss a specific method of manufacturing a composite material by means of examples.

First, a method of manufacturing a composite material by using titanium or a titanium alloy that has been surface-treated by an imidazole compound will be explained.

In the case when the adhere is prepared as a resin that has been cured, metal or the like, first, an adhesive resin is applied onto the adhesion surface of the titanium or titanium alloy that has been surface-treated through the above-mentioned method, by using a method such as a coating method, a dipping method and a spraying up method, or a plate-shaped or film-state adhesive resin is placed on the adhesion surface of the titanium or titanium alloy. Next, the adhere is laminated on the adhesive resin, and by curing the adhesive resin under curing conditions having predetermined temperature, pressure and the like, the adhere is adhered to the titanium or titanium alloy. Of course, after the adhesive resin has been preliminarily applied to the adhesion surface of the adhere, this may be laminated so that the adhesive resin is placed on the adhesion surface of the titanium or titanium alloy to be adhered thereto.

Here, with respect to the adhesive resin, any conventional bonding agent suitable for the adhere, such as a plastic material or a metal material, may be used. Moreover, the adhesive resin composition of the present invention may also be used preferably.

In the case when the adhere is prepared as a plastic material prior to its curing process, after the plastic material prior to the curing process has been applied onto the adhesion surface of the titanium or titanium alloy that has been surface-treated through the above-mentioned method, by using a method such as a coating method, a spraying up method, and a dipping method or after a plate-shaped or film-state plastic material prior to the curing process has been placed on the adhesion surface of the titanium or titanium alloy, the plastic material is cured under curing conditions having predetermined temperature, pressure and the like of the plastic material so that the adhering process can be carried out. In the case when the adhere is prepared as a coating material, such as a urethane coating material and an acryl coating material, as well, the same process can be carried out.

In the case when adhering and molding processes are carried out by using an uncured fiber reinforced plastic such as a prepreg, after the uncured fiber reinforced plastic has been placed on the adhesion surface of titanium or a titanium alloy that has been surface-treated by the aforementioned method, a matrix resin forming the fiber reinforced plastic is cured under curing conditions having predetermined pressure, temperature and the like so that the fiber reinforced plastic can be adhered and molded. This method is preferable since the curing and molding processes of the fiber reinforced plastic and the adhering process of the fiber reinforced plastic to titanium or a titanium alloy are simultaneously carried out.

For example, in the case of using a prepreg, the prepreg, cut into pieces having a predetermined size with an orientation angle of fibers determined based upon a predetermined lamination structure, is laminated on the adhesion surface of the titanium or titanium alloy that has been surface-treated, and the prepreg can be adhered and molded thereon by applying curing temperature and pressure thereto in accordance with predetermined curing conditions of the prepreg.

Not limited to the prepreg mode, the fiber reinforced plastic may be prepared as a SMC (Sheet Molding Compound) base material or a BMC (Bulk Molding Compound) base material in which discontinuous fibers are used. After the SMC base material or the BMC base material has been placed on the surface of titanium or a titanium alloy that has been subjected to a surface treatment, the base material can be cured and adhered thereto, under molding conditions having predetermined temperature, pressure and the like.

Moreover, the matrix resin forming the fiber reinforced plastic is not necessarily preliminarily impregnated in the same manner as prepreg and SMC, and may be molded by using an RTM (Resin Transfer Molding) process.

In the case of the RTM molding process, titanium or a titanium alloy that has been surface-treated is placed on a mold or a tool plate used for molding, and after a reinforcing fiber base material such as a one-direction material or a textile material has been placed on the adhesion surface, resin is allowed to flow into the material through a predetermined pressure. The reinforcing fiber base material is impregnated with the resin, andaftertheimpregnationofthe resin has been accelerated through predetermined temperature and pressure, the resin is cured so as to be adhered thereon.

All the above-mentioned curing conditions may be set by using step curing operations, or by a combination of a plurality of curing temperatures and curing pressures. In other words, by carrying out a plurality of curing conditions in which, after the resin of a plastic material or the resin of a fiber reinforced composite material has been cured (prepared) to a certain level by using first curing conditions, the resin is cured (after cure) under second curing conditions, the resin can be adhered and cured.

Next, a method of manufacturing a composite material by using an adhesive resin composition in which an imidazole compound is blended will be explained.

First, in the same manner as the surface treatingprocess, the adhesion surface of titanium or a titanium alloy is subjected to a sanding or blasting process by using a sand paper, a sand-blasting process or a wet-blasting process. After having been subjected to the sanding process or blasting process, the adhesion surface is washed and defatted with an organic solvent such as acetone or ethanol.

Next, after an adhesive resin composition has been applied to the adhesion surface of the titanium or titanium alloy by using a coating method, spraying up method, a dipping method or the like, an adhere is laminated on the adhesive resin composition so that, by curing the adhesive resin composition in accordance with curing conditions having predetermined temperature, pressure and the like, the adhere can be adhered thereto. Of course, after an adhesive resin composition has been preliminarily applied to the adhesion surface of the adhere, this may be laminated so that the adhesive resin composition is placed on the adhesion surface of the titanium or titanium alloy to be adhered thereto.

In the case when the adhesive resin composition of the present invention is used, the surface treatment onto the titanium or titanium alloy by the use of an imidazole compound or a solution thereof is not necessarily required. After having been subjected to the sanding process or blasting process by using a sand paper, it is only necessary for the surface of the titanium or titanium alloy to be washed and defatted with an organic solvent such as acetone or ethanol. Of course, the adhesive resin composition of the present invention may be applied to the adhesion surface that has been surface-treated by using an imidazole compound or its solution.

In the case when the adhere is prepared as a plastic material prior to its curing process, after the plastic material prior to the curing process has been laminated on the adhesive resin composition, the adhesive resin composition can be cured in accordance with curing conditions having predetermined temperature, pressure and the like of the adhesive resin composition, with the plastic material being simultaneously cured. In the case when the curing reaction of the plastic material of the adhere is insufficient under the curing conditions of the adhesive resin composition, after a plastic material has been adhered by curing the adhesive resin composition, the plastic material maybe again sufficiently cured in accordance with curing conditions of the plastic material so that the plastic material is sufficiently cured, with the adhere being adhered and molded thereon.

In this case, when the adhesive resin composition and the resin forming the plastic material are prepared as the same kindof resin, this arrangement is preferable, because the adhering process and the curing process of the resin forming the plastic material can be carried out simultaneously.

The same processes may be carried out also in the case of using fiber reinforced plastic as the plastic material. Moreover, with respect to the fiber reinforced plastic base material, SMC and BMC base materials may also be used in addition to prepreg.

Next, a method of manufacturing a composite material by using the adhesive resin film of the present invention will be explained.

First, in the same manner as the surface treatingprocess, the adhesion surface of titanium or a titanium alloy is subjected to a sanding or blasting process by using a sand paper, a sand-blasting process or a wet-blasting process. After having been subjected to the sanding process or blasting process, the adhesion surface is washed and defatted with an organic solvent such as acetone or ethanol.

Next, after an adhesive resin film has been laminated to the adhesion surface of the titanium or titanium alloy, an adhere is laminated on the adhesive resin film, and the adhesive resin composition forming the adhesive resin film is cured under curing conditions having predetermined temperature, pressure and the like so that the adhere can be adhered thereto.

Of course, after an adhesive resin film has been preliminarily applied to the adhesion surface of the adhere, this may be laminated so that the adhesive resin film is placed on the adhesion surface of the titanium or titanium alloy to be adhered and molded thereon.

The molding method in which the adhesive resin film is used is basically the same as the method in the case of using the adhesive resin composition; however, the molding method is preferably used when the molded product has a comparatively simple adhesion surface like a plate member, because it becomes possible to form the adhesive resin composition with an even film thickness without irregularities in thickness.

Next, a method of manufacturing a composite material by using the prepreg of the present invention will be explained.

The prepreg may be molded by using a conventional molding method.

After the prepreg and titanium or a titanium alloy have been laminated so as to have a predetermined stacking sequence, this is molded by applying predetermined temperature and pressure thereto based upon curing conditions of a matrix resin forming the adhesive resin composition and the prepreg. In particular, in the case when a prepreg on the surface layer of which the adhesive resin composition is formed is used, the prepreg is laminated, in such a manner that the adhesive resin composition being placed on the adhesion surface of the titanium or titanium alloy, and molded.

The use of the prepreg makes it possible to eliminate the necessity of the surface treatment on the titanium or titanium alloy by the use of an imidazole compound or the use of the adhesive resin composition containing the imidazole compound; therefore, it becomes possible to desirably simplify the lamination processes.

The composite material of the present invention obtained through the above-mentioned method is allowed to have a peel torque of 5N-mm/mm or more required for peeling the adhere from the titanium or titanium alloy upon measurements of the adhesive property (hereinafter, referred to as CDP test) between the titanium or titanium alloy and the adhere that has been adhered thereon, in compliance with ASTM D1781-98 (1998). Morepreferably, the peel torque is set to 10N-mm/mm or more.

The peel torque of less than 5N-mm/mm tends to cause an insufficient adhesive property, resulting in a problem of peeling upon application of a load or an impact onto the composite material.

In general, upon evaluating an adhesive property, a testing process for a lap shear adhesive strength, as described in JIS K 6850 (1999) "Lap shear adhesive strength testing method between adhesive and rigid adhere", is carried out. However, the lap shear adhesive strength does not necessarily correspond to a peeling strength that is actually exerted. This lap shear adhesive strength testing method is effectively used for a case in which an adhere having a comparatively good adhesive property is used, with the fracture behavior at the adhered portion being set in a shear mode. However, this method is not effectively applied to a case in which an adhere, such as titanium or a titanium alloy, that is extremely poor in adhesive property is used, with the fracture behavior at the adhered portion being set in a peel mode. In the case when titanium or a titanium alloy is used as the adhere, even when a lap shear adhesive strength is being exerted to a certain degree, a peeling frequently occurs easily in the peel mode. For this reason, with respect to a method used for more effectively evaluating the adhesive property, a method for measuring a peel torque, described inASTM D 1781-98, is preferably used.

### EXAMPLES

The following description will discuss Examples and Comparative Examples of the present invention. First, an evaluation method to be used will be explained.

<Lap shear test and CDP test>
By using an adhesion sample between a titanium alloy and carbon fiber reinforced plastic, a lap shear test and a CDP test were conducted. The preparation of the lap shear test pieces and the testing method were based upon JISK 6850 (1999). Moreover, the preparation of the CDP test pieces and the testing method were based upon ASTM D 1781-98 (1998).

<Fracture energy release rate>
The fracture energy release rate G_{1C} of a thermoplastic resin was measured by using the DT method described in pp. 77-84, Vol. 20 of Journal of Materials Science (1985).

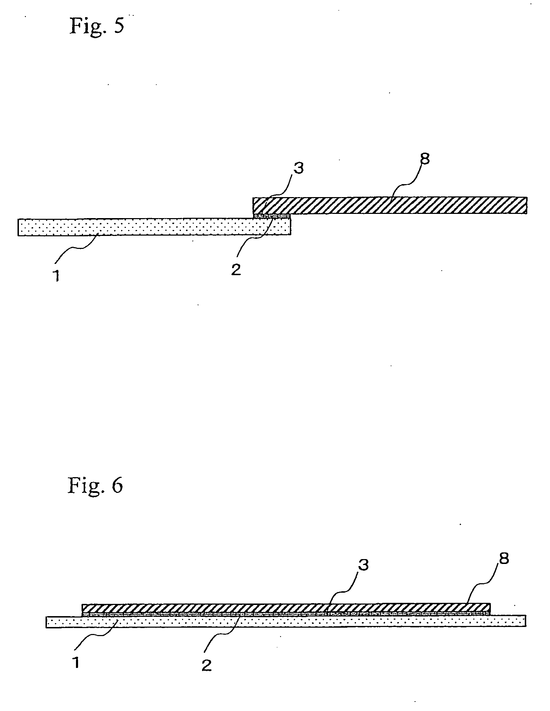

(Example 1)
The following description will discuss the preparation method of lap shear test pieces. Fig. 5 shows a longitudinal cross-sectional view of the lap shear test piece obtained.

In Fig. 5, a titanium alloy 1, used as the sample, was an alloy of Ti-15V-3Cr-3Al-3Sn, and after this had been cut into a shape having a width of 25 mm, a length of 100 mm and a thickness of 2. 75 mm, the adhesion surface 2 thereof was washed with acetone, and prepared as the sample.

Next, the adhesion surface 2 of the titanium alloy 1 was subj ected to a surface treatment by using a solution of an imidazole compound. The surface treatment method is explained as follows.

An imidazole solution, obtained by diluting 2-undecylimidazole (made by Shikoku Chemicals Corp.,C11Z) to a concentration of 1.0% by using ethanol, was applied to the adhesion surface 2 (12.5 mm in superposed length x 25 mm in width), and ethanol was then evaporated at normal temperature so that the surface treatment was conducted on the adhesion surface 2 of the titanium alloy.

An epoxy resin film 3 with a areal weight of 60 g/m² was placed as an adhesive resin on the adhesion surface 2 that had been surface-treated, and carbon fiber reinforced plastic 4 (hereinafter, referred to as CFRP) with a shape having a width of 25 mm, a length of 100 mm and a thickness of 2.7 mm, formed by curing a carbon fiber prepreg, was further superposed thereon with a superposed length of 12.5 mm. Here, the CFRP4, which was prepared by laminating 16 plies of prepreg using carbon fibers T800H made by Toray Industries, Inc. as reinforced fibers in one direction, was cut so that the fiber direction was aligned in the length direction, with the adhesion surface to the titanium alloy being surface-polished by sand blasting. The resin composition of the epoxy resin film 3 was basically the same as the resin forming the prepreg, and the curing conditions thereof were the same as those of the prepreg. In other words, the epoxy resin was prepared by blending aliquid-state bisphenol-type epoxy resin as a main agent, an amine-based curing agent as a curing agent and polyvinyl formal as a thickener, and used.

Next, the end portion of the superposed portion of the titanium alloy 1 and the CFRP4 were covered with a heat-resistant tape (made by Nichiban Co., Ltd., Polyester tape NO.558A) so as to be temporarily secured, and the epoxy resin film 3 was cured under 6.0 kg/cm² at 180°C for 2 hours by using an autoclave so that the titanium alloy 1 and the CFRP4 were adhered to each other. Thus, ten lap shear test pieces were manufactured.

The following description will discuss the preparation method of CDP test pieces. Fig. 6 shows a vertical cross-sectional view of the CDP test piece obtained. In Fig. 6, a titanium alloy 1, used as the sample, was an alloy of Ti-15V-3Cr-3Al-3Sn with a thickness of 0.13 mm, and after this had been cut into a shape having a width of 25 mm and a length of 300 mm, the adhesion surface 2 thereof was washed with acetone.

Next, in the same manner as the lap shear test piece, the adhesion surface 2 of the titanium alloy 1 (250 mm in superposed length × 25 mm in width) was subjected to a surface treatment.

In the same manner as the lap shear test piece, an epoxy resin film 3 with a areal weight of 60 g/m² was placed as an adhesive resin on the adhesion surface 2 of the titanium alloy that had been surface-treated, and a CFRP 4 with a shape having a width of 25 mm and a length of 250 mm, formed by curing a carbon fiber prepreg, was further superposed thereon.

Here, the CFRP4 was formed by laminating 16 plies of prepreg using carbon fibers T800H made by Toray Industries, Inc. as reinforced fibers in one direction, and the adhesion surface to the titanium alloy was surface-polished by sand blasting.

Next, the end portion of the superposed portion of the titanium alloy 1 and the CFRP4 were covered with a heat-resistant tape so as to be temporarily secured, and the epoxy resin film 3 was cured under 6.0 kg/cm² at 180°C for 2 hours by using an autoclave so that the titanium alloy 1 and the CFRP4 were adhered to each other. Thus, ten CDP test pieces were manufactured.

Five of the ten lap shear test pieces were subjected to a lap shear test in compliance with JIS K 6850 at room temperature, and the average value of the test results of the five pieces was found as a lap shear strength. The rest of five pieces were subjected to an environment endurance test (hereinafter, described as H/W) in which they were immersed at 70°C x RH95% for 14 days, and then subjected to the same test at room temperature so that the lap shear strength was found. With respect to the ten CDP test pieces, in the same manner, five pieces were measured at room temperature and the other five pieces were measured under H/W on the peel torque.

As a result, the lap shear strength was 20.6MPa at room temperature and 18.9MPa under H/W. The peel torque of CDP was 15.0N-mm/mm at room temperature and 12.6N-mm/mm under H/W. After both of the lap shear test and the CDP test, traces of fractured base material of CFRP and/or adhesive resin were observed on the fractured cross-sectional faces.

(Example 2)
The same processes as those of Example 1 were carried out except that prior to washing with acetone, the adhesion surface of the titanium alloy was polished by using sand paper of #400 to prepare lap shear test pieces and CDP test pieces, and the lap shear strength and the peel torque of CDP were found.

As a result, the lap shear strength was 23.6MPa at room temperature, and 21.8MPa under H/W. The peel torque of CDP was 19. 5N-mm/mm at room temperature and 18.4N-mm/mm under H/W. After both of the lap shear test and the CDP test, traces of fractured base material of CFRP and/or adhesive resin were observed on the fractured cross-sectional faces.

(Example 3)
The same processes as those of Example 2 were carried out except that, in place of the 2-undecylimidazole solution, an imidazole silane solution, obtained by diluting a silane coupling agent containing an imidazole ring (made by Nikko Materials Co., Ltd., Imidazole silane IA100A) to a concentration of 1.0% by using ethanol, was used to prepare lap shear test pieces and CDP test pieces, and the lap shear strength and the peel torque of CDP were found.

As a result, the lap shear strength was 25.2MPa at room temperature, and 22.1MPa under H/W. The peel torque of CDP was 22.6N-mm/mm at room temperature and 20.1N-mm/mm under H/W. After both of the lap shear test and the CDP test, traces of fractured base material of CFRP and/or adhesive resin were observed on the fractured cross-sectional faces.

(Example 4)
The same processes as those of Example 2 were carried out except that, in addition to polyvinyl formal serving as a thickener, non-crystalline polyamide particles having a glass transition temperature Tg of 150°C, an average particle size of 17µm and a fracture energy release rate G_{1C} of 4397J/m² were blended in the adhesive resin as a thermoplastic resin at 20% by weight in composition weight ratio, to prepare lap shear test pieces and CDP test pieces, and the lap shear strength and the peel torque of CDP were found. As a result, the lap shear strength was 25. 4MPa at room temperature, and 21.8MPa under H/W. The peel torque of CDP was 24.2N-mm/mm at room temperature and 20.4N-mm/mm under H/W. After both of the lap shear test and the CDP test, traces of fractured base material of CFRP and/or adhesive resin were observed on the fractured cross-sectional faces.

(Example 5)
Test pieces were prepared by using an adhesive resin composition. The adhesive resin composition was an adhesive epoxy resin composition formed through processes in which: to an adhesive epoxy resin that has the same composition as that used in Example 1 except that polyvinyl formal was not contained therein was added a silane coupling agent containing an imidazole ring (IA100A) at 1.0% by weight in composition total weight ratio. The same processes as those of Example 2 were carried out except that in place of the 2-undecylimidazole solution, this adhesive composition was applied to the adhesion surface 2 of a titanium alloy to prepare lap shear test pieces and CDP test pieces, and the lap shear strength and the peel torque of CDP were found. As a result, the lap shear strength was 24. 9MPa at room temperature, and 21.8MPa under H/W. The peel torque of CDP was 24.5N-mm/mm at room temperature and 21.2N-mm/mm under H/W. After both of the lap shear test and the CDP test, traces of fractured base material of CFRP and/or adhesive resin were observed on the fractured cross-sectional faces.

(Example 6)
The same processes as those of Example 5 were carried out except that the thermoplastic resin particles used in Example 4 were blended in the adhesive resin composition used in Example 5 at 20% by weight in composition weight ratio, to prepare lap shear test pieces and CDP test pieces, and the lap shear strength and the peel torque of CDP were found. As a result, the lap shear strength was 25.1MPa at room temperature, and 19.8MPa under H/W. The peel torque of CDP was 26.3N-mm/mm at room temperature and 22.4N-mm/mm under H/W. After both of the lap shear test and the CDP test, traces of fractured base material of CFRP and/or adhesive resin were observed on the fractured cross-sectional faces.

(Example 7)
Test pieces were prepared by using an adhesive resin film. The adhesive resin film was an adhesive resin film with a areal weight of 60 g/m² that was prepared by forming as a film an adhesive epoxy resin composition obtained by blending a silane coupling agent (IA100A) containing an imidazole ring in the adhesive resin composition used in Example 1 at 1.0% by weight in composition total weight ratio. The same processes as those of Example 5 were carried out except that this adhesive resin film 3 was placed on the adhesive surface 2 of a titanium alloy, instead of coating it with an adhesive resin composition, to prepare lap shear test pieces and CDP test pieces, and the lap shear strength and the peel torque of CDP were found. As a result, the lap shear strength was 25.5MPa at room temperature, and 22.4MPa under H/W. The peel torque of CDP was 24.8N-mm/mm at room temperature and 21.4N-mm/mm under H/W. After both of the lap shear test and the CDP test, traces of fractured base material of CFRP and/or adhesive resin were observed on the fractured cross-sectional faces.

(Example 8)
Test pieces were prepared by using an adhesive resin film. The adhesive resin film was an adhesive resin film with a areal weight of 60 g/m² that was prepared by forming as a film an adhesive epoxy resin composition that has the same composition as Example 7 except that the thermoplastic resin particles used in Example 4 were blended in the adhesive resin composition used in Example 7 at 20% by weight in composition weight ratio. The same processes as those of Example 7 were carried out except that this adhesive resin film 3 was placed on the adhesive surface 2 of a titanium alloy to prepare lap shear test pieces and CDP test pieces, and the lap shear strength and the peel torque of CDP were found. As a result, the lap shear strength was 25.1MPa at room temperature, and 21.9MPa under H/W. The peel torque of CDP was 26.5N-mm/mm at room temperature and 22.7N-mm/mm under H/W. After both of the lap shear test and the CDP test, traces of fractured base material of CFRP and/or adhesive resin were observed on the fractured cross-sectional faces.
(Example 9)
Test pieces were prepared by using an adhesive resin film. The adhesive resin film was an adhesive resin film with a areal weight of 60 g/m² that was prepared by forming as a film an adhesive epoxy resin composition that has the same composition as Example 4 except that, in place of the thermoplastic resin particles used in Example 4, crystalline polyamide particles having a melting point Tm of 170°C, an average particle size of 5µm and a fracture energy release rate G_{1C} of 28000J/m² were blended at 20% by weight in composition weight ratio. The same processes as those of Example 8 were carried out except that this adhesive resin film 3 was placed on the adhesive surface 2 of a titanium alloy to prepare lap shear test pieces and CDP test pieces, and the lap shear strength and the peel torque of CDP were found. As a result, the lap shear strength was 22.8MPa at room temperature, and 20. 9MPa under H/W. The peel torque of CDP was 21.5N-mm/mm at room temperature and 18.6N-mm/mm under H/W. After both of the lap shear test and the CDP test, traces of fractured base material of CFRP and/or adhesive resin were observed on the fractured cross-sectional faces. Moreover, as a result of observation on the cross-section of the adhesive resin layer that had been cured, it was found that one portion of the crystalline polyamide particles of the thermoplastic resin was cohered in the adhesive resin layer to form a discontinuous phase within a cohesive phase.
(Example 10)
By using an adhesive resin film and a carbon fiber prepreg prior to curing, an adhering process to a titanium alloy and a curing process of the carbon fiber prepreg were simultaneously carried out to prepare lap shear test pieces and CDP test pieces were prepared. The shape of the titanium alloy and the washing process of the adhesion surface were the same as those of Example 1. With respect to the carbon fiber prepreg, a carbon fiber prepreg used in Example 1 was applied in its uncured state.

First, the following description will discuss the preparation method of lap shear test pieces. After the adhesive resin film 3 used in Example 8 had been placed on the adhesion surface 2 of a titanium alloy, the carbon fiber prepreg used in Example 1 was cut in the same manner to have a width of 25 mm and a length of 100 mm, and 16 plies thereof were laminated in the same manner on the adhesion surface 2 so that a superposed length on the titanium alloy was set to 12.5 mm. Since the carbon fiber prepreg was not cured, the adhesion surface of CFRP was not surface-polished by a sand blasting process, and the temporary securing process by a heat resistant tape to the end portion of the superposed portion of the titanium alloy and the carbon fiber prepreg was not carried out.

These samples were processed under 6.0 kg/cm² at 180°C for 2 hours by using an autoclave in the same manner as Example 1. Thus, the adhesive resin film was cured so that the carbon fiber prepreg and the titanium alloy were adhered to each other, while the carbon fiber prepreg was simultaneously cured. In this manner, ten lap shear test pieces were prepared.

Next, the following description will discuss the preparation method of CDP test pieces. The shape of a titanium alloy and the washing process of the adhesion surface were the same as those of Example 1.

After the adhesive resin film 3 had been placed on the adhesion surface 2 of the titanium alloy in the same manner as described above, the carbon fiber prepreg used in Example 1 was cut in the same manner to have a width of 25 mm and a length of 250 mm, and 16 plies thereof were laminated in the same manner on the adhesion surface 2. In the same manner as the lap shear test piece, the adhesion surface of CFRP was not surface-polished, and the temporary securing process by a heat resistant tape to the end portion of the superposed portion of the titanium alloy and the carbon fiber prepreg was not carried out.

These samples were processed under the same autoclave conditions, that is, 6.0 kg/cm² at 180°C for two hours, in the same manner as Example 1. Thus, the adhesive resin film was cured so that the carbon fiber prepreg and the titanium alloy were adhered to each other, while the carbon fiber prepreg was simultaneously cured. In this manner, ten CDP test pieces were prepared.

As a result, the lap shear strength was 25.3MPa at room temperature, and 22.1MPa under H/W. The peel torque of CDP was 26.1N-mm/mm at room temperature and 22.5N-mm/mm under H/W. After both of the lap shear test and the CDP test, traces of fractured base material of CFRP and/or adhesive resin were observed on the fractured cross-sectional faces.

(Example 11)
By using an adhesive resin film and a carbon fiber prepreg prior to curing, an adhering process to a titanium alloy and a curing process of the carbon fiber prepreg were simultaneously carried out to prepare lap shear test pieces and CDP test pieces were prepared. The adhesive resin film 3 was an adhesive resin film with a areal weight of 60 g/m² that was prepared by forming as a film an adhesive epoxy resin composition obtained by blending a silane coupling agent (IA100A) containing an imidazole ring in the adhesive resin composition used in Example 9 at 1.0% by weight in composition total weight ratio. The same processes as those of Example 10 were carried out except that this adhesive resin film 3 was placed on the adhesive surface 2 of a titanium alloy to prepare lap shear test pieces and CDP test pieces, and the lap shear strength and the peel torque of CDP were found.

As a result, the lap shear strength was 25.8MPa at room temperature, and 21.9MPa under H/W. The peel torque of CDP was 27.1N-mm/mm at room temperature and 22.5N-mm/mm under H/W. After both of the lap shear test and the CDP test, traces of fractured base material of CFRP and/or adhesive resin were observed on the fractured cross-sectional faces.

(Example 12)
By using a prepreg obtained by impregnating a reinforcing fiber base material with an adhesive resin composition, test pieces were prepared. With respect to the prepreg, a carbon fiber prepreg, obtained by impregnating a one-direction carbon fiber base material of carbon fiber T800H made by Toray Industries, Inc. with the adhesive resin composition used in Example 8 so as to have a carbon fiber areal weight of 190 g/m², was used. The same processes as those of Example 10 were carried out except that the prepreg was directly placed on the adhesion surface 2 of a titanium alloy, without using the adhesive resin film 3, to prepare lap shear test pieces and CDP test pieces, and the lap shear strength and the peel torque of CDP were found.

As a result, the lap shear strength was 24.9MPa at room temperature, and 21.9MPa under H/W. The peel torque of CDP was 25.7N-mm/mm at room temperature and 21.9N-mm/mm under H/W. After both of the lap shear test and the CDP test, traces of fractured base material of CFRP and/or adhesive resin were observed on the fractured cross-sectional faces.

(Example 13)
By using a prepreg obtained by impregnating a reinforcing fiber base material with an adhesive resin composition, test pieces were prepared. With respect to the prepreg, a prepreg, obtained by carrying out the same processes as those of Example 12 except that the adhesive resin composition used in Example 9 was used instead of using the adhesive resin composition used in Example 12, was adopted to prepare lap shear test pieces and CDP test pieces, and the lap shear strength and the peel torque of CDP were found.

As a result, the lap shear strength was 22. 9MPa at room temperature, and 19.8MPa under H/W. The peel torque of CDP was 21.7N-mm/mm at room temperature and 19.2N-mm/mm under H/W. After both of the lap shear test and the CDP test, traces of fractured base material of CFRP and/or adhesive resin were observed on the fractured cross-sectional faces. Moreover, as a result of observation on the cross-section of the adhesive resin layer that had been cured, it was found that one portion of the crystalline polyamide particles of the thermoplastic resin was cohered in the adhesive resin layer to form a discontinuous phase within a cohesive phase.

(Example 14)
By using a prepreg obtained by laminating an adhesive resin film to a conventional prepreg, test pieces were prepared. The prepreg was formed by laminating the adhesive resin film used in Example 11 to the surface of a one-direction carbon fiber prepreg of carbon fiber T800H made by Toray Industries, Inc. by using a calender roll. The same processes as those of Example 13 were carried out except that the adhesive resin film side of the prepreg was placed in contact with the adhesion surface 2 of a titanium alloy to prepare lap shear test pieces and CDP test pieces, and the lap shear strength and the peel torque of CDP were found.

As a result, the lap shear strength was 27.5MPa at room temperature, and 24.3MPa under H/W. The peel torque of CDP was 30. 5N-mm/mm at room temperature and 26. 7N-mm/mm under H/W. After both of the lap shear test and the CDP test, traces of fractured base material of CFRP and/or adhesive resin were observed on the fractured cross-sectional faces.

(Example 15)
By using a prepreg obtained by laminating an adhesive resin film to a conventional prepreg, test pieces were prepared. The same processes as those of Example 13 were carried out except that the resin film used in Example 9 was used as the adhesive resin film to be laminated to the prepreg to prepare lap shear test pieces and CDP test pieces, and the lap shear strength and the peel torque of CDP were found.

As a result, the lap shear strength was 23.1MPa at room temperature, and 19.9MPa under H/W. The peel torque of CDP was 22.3N-mm/mm at room temperature and 19. 3N-mm/mm under H/W. After both of the lap shear test and the CDP test, traces of fractured base material of CFRP and/or adhesive resin were observed on the fractured cross-sectional faces. Moreover, as a result of observation on the cross-section of the adhesive resin layer that had been cured, it was found that one portion of the crystalline polyamide particles of the thermoplastic resin was cohered in the adhesive resin layer to form a discontinuous phase within a cohesive phase.

(Comparative Example 1)
The same processes as those of Example 1 were carried out except that an imidazole compound was not applied to the adhesion surface 2 of a titanium alloy to prepare lap shear test pieces and CDP test pieces, and the lap shear strength and the peel torque of CDP were found. As a result, the lap shear strength was 14.1MPa at room temperature, and 8.2MPa under H/W. The peel torque of CDP was in a hardly detectable level at room temperature as well as under H/W. After both of the lap shear test and the CDP test, no traces of fractured base material of CFRP and/or adhesive resin were observed on the fractured cross-sectional faces.

(Comparative Example 2)
The same processes as those of Example 2 were carried out except that an imidazole compound was not applied to the adhesion surface 2 of a titanium alloy to prepare lap shear test pieces and CDP test pieces, and the lap shear strength and the peel torque of CDP were found. As a result, the lap shear strength was 15. 8MPa at room temperature, and 11.3MPa under H/W. The peel torque of CDP was 1.9N-mm/mm at room temperature, and 1.4N-mm/mm under H/W. After the lap shear test, no traces of fractured base material of CFRP were observed on the fractured cross-sectional faces. After the CDP test also, no traces of fractured base material of CFRP were observed on the fractured cross-sectional faces.

(Comparative Example 3)
The same processes as those of Comparative Example 1 were carried out except that the thermoplastic resin particles used in Example 4 were blended in the adhesive resin used in Comparative Example 2 at 20% by weight in composition weight ratio to prepare lap shear test pieces and CDP test pieces, and the lap shear strength and the peel torque of CDP were found. As a result, the lap shear strength was 15.2MPa at room temperature, and 10.9MPa under H/W. The peel torque of CDP was in a hardly detectable level at room temperature as well as under H/W. After both of the peel shear test and the CDP test, no traces of fractured base material of CFRP and/or adhesive resin were observed on the fractured cross-sectional faces.

(Comparative Example 4)
In place of an imidazole compound, an epoxy silane coupling agent was applied to the adhesion surface 2 of a titanium alloy. The method of applying the epoxy silane coupling agent to the adhesion surface is explained as follows:

A solution, prepared by diluting an epoxy silane coupling agent (made by Shin-Etsu Chemical Co., Ltd., KBM-403) to a concentration of 1.0% by using ethanol, was applied to the adhesion surface 2, and the ethanol was then evaporated at normal temperature so that the epoxy silane coupling agent was applied to the adhesion surface of a titanium alloy. Except for these processes, the same processes as those of Example 2 were carried out to prepare lap shear test pieces and CDP test pieces, and the lap shear strength and the peel torque of CDP were found. As a result, the lap shear strength was 14. 3MPa at room temperature, and 9.4MPa under H/W. The peel torque of CDP was virtually zero at room temperature as well as under H/W. After both of the peel shear test and the CDP test, no traces of fractured base material of CFRP were observed on the fractured cross-sectional faces.

The following Table 2 collectively shows the results of the above-mentioned tests.

[Table 2]

**Table 2**

| | Room temperature Lap shear strength (MPa) | H/W Lap shear strength (MPa) | Room temperature CDP peel torque (N-mm/mm) | H/W CDP peel torque (N-mm/mm) |
|---|---|---|---|---|
| Example 1 | 20.6 | 18.9 | 15.0 | 12.6 |
| Example 2 | 23.6 | 21.8 | 19.5 | 18.4 |
| Example 3 | 25.2 | 22.1 | 22.6 | 20.1 |
| Example 4 | 25.4 | 21.8 | 24.2 | 20.4 |
| Example 5 | 24.9 | 21.8 | 24.5 | 21.2 |
| Example 6 | 25.1 | 19.8 | 26.3 | 22.4 |
| Example 7 | 25.5 | 22.4 | 24.8 | 21.4 |
| Example 8 | 25.1 | 21.9 | 26.5 | 22.7 |
| Example 9 | 22.8 | 20.9 | 21.5 | 18.6 |
| Example 10 | 25.3 | 22.1 | 26.1 | 22.5 |
| Example 11 | 25.8 | 21.9 | 27.1 | 22.5 |
| Example 12 | 24.9 | 21.9 | 25.7 | 21.9 |
| Example 13 | 22.9 | 19.8 | 21.7 | 19.2 |
| Example 14 | 27.5 | 24.3 | 30.5 | 26.7 |
| Example 15 | 23.1 | 19.9 | 22.3 | 19.3 |
| Comparative Example 1 | 14.1 | 8.2 | 0 | 0 |
| Comparative Example 2 | 15.8 | 11.3 | 1.9 | 1.4 |
| Comparative Example 3 | 15.2 | 10.9 | 0 | 0 |
| Comparative Example 4 | 14.3 | 9.4 | 0 | 0 |

As indicated by Table 2, in any of Examples 1 to 8, Examples 10 to 12 and 14 in which an imidazole compound was contained in the adhesion surface of a titanium alloy as well as in any of Examples 9, 13, and 15 in which an adhesive resin composition containing a thermoplastic resin having a fracture release rate G_{1C} of 4500J/m² or more was used, the peel torque of CDP was 15.0N-mm/mm or more at room temperature and 12.6N-mm/mm or more even under H/W, and traces of fractured base material of CFRP and/or adhesive resin were observed on the adhesion surface of the titanium alloy that had been fractured, indicating that a superior adhesive property was prepared.

In contrast, in any of Comparative Examples 1 to 3 in which no imidazole compound was contained in the adhesion surface of a titanium alloy, without containing a thermoplastic resin having a fracture release rate G_{1C} of 4500J/m² or more, the CDP peel torque was virtually zero, with the result that peeling easily occurred. Moreover, no traces of fractured base material of CFRP were observed on the adhesion surface of the titanium alloy that had been fractured, indicating that the adhesive property was poor.

Moreover, in Comparative Example 4 in which an epoxy silane coupling agent was applied to the adhesion surface of a titanium alloy, the CDP peel torque was virtually zero, and no traces of fractured base material of CFRP were observed on the adhesion surface of the titanium alloy that had been fractured, indicating that the adhesive property was poor.

### INDUSTRIAL APPLICABILITY

The present invention provides titanium or a titanium alloy that exerts a superior adhesive strength stably at room temperature as well as even after exposure to a high-temperature, high-humidity condition, and a composite material using such titanium or a titanium alloy, which is desirably applied to structural members such as automobile parts, construction materials, aircraft parts and members for sports goods. The present invention also provides an adhesive resin composition for titanium or a titanium alloy, a surface treatment method for titanium or a titanium alloy and a manufacturing method of such a composite material.

## Claims

1. Titanium or a titanium alloy which is surface-treated by an imidazole compound.

2. The titaniumor titanium alloy according to claim 1, wherein the imidazole compound is an imidazole silane compound.

3. An adhesive resin composition for titanium or a titanium alloy, comprising: a thermosetting resin and an imidazole compound.

4. The adhesive resin composition for titanium or a titanium alloy according to claim 3, further comprising a thermoplastic resin.

5. The adhesive resin composition for titanium or a titanium alloy according to any of claims 3 and 4, wherein the imidazole compound is an imidazole silane compound.

6. An adhesive resin composition for titanium or a titanium alloy, comprising: a thermosetting resin and a thermoplastic resin.

7. The adhesive resin composition for titanium or a titanium alloy according to any of claims 4 to 6, wherein the thermoplastic resin has a fracture energy release rate G_{1C} of 4500J/m² or more.

8. The adhesive resin composition for titanium or a titanium alloy according to any of claims 4 to 7, wherein the thermoplastic resin in the adhesive resin composition that has been cured is in a discontinuous phase as well as in a cohesive phase.

9. The adhesive resin composition for titanium or a titanium alloy according to any of claims 4 to 8, wherein the thermoplastic resin in the adhesive resin composition is a crystalline thermoplastic resin.

10. The adhesive resin composition for titanium or a titanium alloy according to any of claims 3 to 9, wherein the thermoplastic resin is an epoxy resin.

11. An adhesive resin film for titanium or a titanium alloy comprising the adhesive resin composition according to any of claims 3 to 10.

12. A prepreg comprising the adhesive resin composition according to any of claims 3 to 10 and reinforcing fibers.

13. The prepreg according to claim 12, wherein the reinforcing fibers are impregnated with the adhesive resin composition.

14. The prepreg according to claim 12, wherein the adhesive resin composition is placed on a surface layer of the prepreg.

15. A prepreg comprising the adhesive resin film according to claim 11 placed on the surface layer of the prepreg.

16. The prepreg according to any of claims 12 to 15, wherein the reinforcing fibers are carbon fibers.

17. Acompositematerial comprising: the titaniumor titanium alloy according to claim 1 or claim 2 and an adhere that are adhered to each other.

18. The composite material according to claim 17, wherein the adhere is a plastic material or a metal material.

19. The composite material according to claim 18, wherein the adhere is a fiber reinforced plastic material.

20. The composite material according to claim 19, wherein a discrete adhesive resin layer is formed between the titanium or a titanium alloy and the fiber reinforced plastic.

21. A composite material wherein titaniumor a titanium alloy and an adhere are adhered to each other through an adhesive resin layer formed by curing the adhesive resin composition according to any of claims 3 to 10.

22. A composite material wherein titanium or a titanium alloy and an adhere are adhered to each other through an adhesive resin layer formed by curing the adhesive resin film according to claim 11.

23. The composite material according to claim 21 or claim 22, wherein the adhere is a plastic material or a metal material.

24. The composite material according to claim 23, wherein the adhere is a fiber-reinforced plastic.

25. A composite material wherein titanium or a titanium alloy and the prepreg according to any of claims 12 to 16 are adhered to each other.

26. The composite material according to any of claims 17 to 25, wherein the peel torque of the titanium or titanium alloy from the adhere, measured in compliance with ASTM D 1781-98, is 5N-mm/mm or more.

27. A surface treatment method of titanium or a titanium alloy comprising the step of: surface-treating the surface of the titanium or titanium alloy by using an imidazole compound or a solution thereof.

28. A manufacturing method of a composite material comprising the step of: applying the adhesive resin composition according to any of claims 3 to 10 to the surface of titanium or a titanium alloy.

29. Amanufacturingmethodof a composite material comprising the step of: laminating the adhesive resin film according to claim 11 to the surface of titanium or a titanium alloy.

30. Amanufacturingmethodof a composite material comprising the step of: laminating the prepreg according to any of claims 12 to 16 to the surface of titanium or titanium alloy.

31. Amanufacturingmethodof a composite material comprising the steps of: applying an adhesive resin composition containing a thermosetting resin and a thermoplastic resin to the surface of titanium or a titanium alloy; and conducting a heating process to a temperature of not less than the melting point of the thermoplastic resin.
